# EUROPEAN PATENT SPECIFICATION

(11) **EP 3 771 596 B1**
(45) Date of publication and mention of the grant of the patent: **16.04.2025**
(21) Application number: 19189689.3
(22) Date of filing: 01.08.2019
(51) Int. Cl.: B60Q 3/64

(54) **A SYSTEM FOR INTERIOR LIGHTING**
SYSTEM ZUR INNENRAUMBELEUCHTUNG
SYSTÈME D'ÉCLAIRAGE INTÉRIEUR

(43) Date of publication of application: 03.02.2021
(73) Proprietor: HELLA Saturnus Slovenija d.o.o., 1000 Ljubljana (SI)
(72) Inventor: Mateja, Kokole, 1240 Kamnik (SI)

(56) References cited:
- EP-A1- 2 878 488
- EP-A1- 3 103 664
- WO-A1-2014/155350
- DE-A1- 102016 003 974
- DE-A1- 102017 208 695
- DE-A1- 3 339 614
- JP-A- 2001 180 252
- US-A1- 2009 154 136

## Description

### TECHNICAL FIELD

The present invention relates to a rotating illumination system for interior of a vehicle in accordance with the preamble of claim 1.

### BACKGROUND OF THE INVENTION

Internal or interior lighting of vehicles, homes, etc. play a major role in the look and feel of the space and also easy access or movement around and within the space. In an automotive environment, i.e., in the interior of a vehicle, it is desired that vehicle controls and accessory controls or knobs are visible in the dark and easily accessible to the driver of the vehicle without causing much distraction.

As an example, ventilation devices/air vents for blowing air towards the passenger compartment should be easy to access/control by the driver even in the dark. Lighting of ventilation devices can be advantageous to make them easier to find such that the driver of the vehicle is not distracted while adjusting the ventilation.

Most conventional ventilation devices/air vents in vehicle interiors are provided with light emitting units illuminated by a light source such as LEDs. Thus, the exterior of the air vents can be illuminated by turning on the light emitting units, improving the discoverability of the ventilation devices/air vents in a dark environment. Similarly, cup holders and other accessory units in a vehicle can also be illuminated by a light source such that the discoverability of such units are also improved.

In most conventional systems, a light guide path for guiding the light from a light source to the light-emitting unit is formed. The light is emitted towards the light emitting units from the light emitting unit, which may be operably manipulated. However, the challenge in implementing the above configurations is associated with limited space in closed areas. As an example, distribution of light from the light source uniformly in all desired areas/corners/positions/directions in the interior is a challenge with the conventional system.

DE 10 2016 003 974 A1 discloses a system in accordance with the preamble of claim 1.

Further prior art is known from DE 10 2017 208 695 A1, EP 3 103 664 A1, US 2009/154136 A1, WO 2014/155350 A1, JP 2001 180252 A, DE 33 39 614 A1, and EP 2 878 488 A1.

Hence, there is a need for a solution which enables uniform/equal amount of light output to be distributed in all desired areas/corners/positions/directions of an interior space and at the same time managing the interior space effectively.

### SUMMARY OF THE INVENTION

The object is satisfied by a system in accordance with the features of claim 1. Preferred embodiments of the present invention are described in the dependent claims.
In accordance with the present invention, an embodiment provides a rotating illumination system for interior of a vehicle. The rotating illumination system includes one or more first light guides and a second light guide. The one or more first light guides are configured for propagating light, the light being received from one or more illumination sources by a first end of each of the one or more first light guides. The light exits from a second end of each of the one or more first light guides. The second light guide is configured to receive the light homogeneously. The second light guide is movable around its rotational axis to facilitate distribution of the homogeneous light at each position of rotation of the second light guide, wherein the second light guide is circular, wherein the second end of each first light guide is C-shaped, and the second light guide receives the light homogeneously from each C-shaped end of each first light guide in each position of the rotational axis of the second light guide, wherein the system includes two first light guides, wherein each of the two first light guides extends from the first end along a longitudinal axis defining a bar shaped configuration, and the rotational axis passes through the two centers of the C-shaped ends of the two first light guides, wherein the second light guide defines two shapes at two positions along the circumference of the circular second light guide, wherein each of the shapes is parallel and concentric to one of the C-shaped configurations of the two first light guides.

### BRIEF DESCRIPTION OF THE DRAWINGS

For a more complete understanding of example embodiments of the present technology, reference is now made to the following descriptions taken in connection with the accompanying drawings in which:
FIG. 1 is an exemplary representation of a vehicle interior in which a system for interior lighting is disposed, in accordance with at least one embodiment;
FIG. 2 is an exemplary representation of system for interior lighting, in accordance with an example embodiment of the present invention;
FIG. 3A is an exemplary representation of two first light guides and a second light guide of the system for interior lighting, in accordance with an example embodiment of the present invention;
FIG. 3B is another exemplary representation illustrating the two first light guides and a second light guide of the system for interior lighting, wherein the second light guide is in a rotated position, in accordance with an example embodiment of the present invention;
FIG. 4 is an isometric view of the first light guide of the system for interior lighting, in accordance with an example embodiment of the present invention; and
FIG. 5 is an isometric view of the second light guide of the system for interior lighting, in accordance with an example embodiment of the present invention;

### DETAILED DESCRIPTION OF THE PREFERED EMBODIMENTS

In the following description, for purposes of explanation, numerous specific details are set forth in order to provide a thorough understanding of the present invention. It will be apparent, however, to one skilled in the art that the present invention can be practiced without these specific details. In other instances, systems and methods are shown in block diagram form only in order to avoid obscuring the present invention.

Reference in this specification to "one embodiment" or "an embodiment" means that a particular feature, structure, or characteristic described in connection with the embodiment is included in at least one embodiment of the present invention. The appearance of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present invention as defined by the appended claims. Similarly, although many of the features of the present invention are described in terms of each other, or in conjunction with each other, one skilled in the art will appreciate that many of these features can be provided independently of other features. Accordingly, this description of the present invention is set forth without any loss of generality to, and without imposing limitations upon the present invention.

Various example embodiments of the present invention provide a system for interior lighting. The system for interior lighting is disposed in the interior of a vehicle, to illuminate areas such as in the air vents, cup holders, or other control knobs or switches present in a vehicle. The system for interior lighting in the present invention is an exemplary system used in air vents.

The system for interior lighting includes one or more illumination sources comprising Light Emitting Diodes (LEDs). The illumination source may even include one or more arrays of LEDs. The system for interior lighting includes one or more first light guides and a second light guide. In accordance with the present invention, the example system for interior lighting in the present invention includes two identical first light guides and one second light guide. The second light guide rotates around its rotational axis. The rotational axis passes through the centers of the first light guides. The rotational axis may be orthogonal to a logitudinal axis of the first light guides.

The first light guides are stationary or fixed. The illumination source may be placed in the stationary part i.e. the first light guides. Alternatively, the illumination source may be placed away and separate from the first light guide but ensuring that not much light escapes the interface between the illumination source and the first light guide. The second light guide and the first light guides are arranged such that an exit surface of the first light guides and an entering surface of the second light guide are parallel and maintains a gap between the second light guide and the first light guides considering the tolerances of the assembly and light guide sizes.

The first light guides facilitate propagation of homogeneous light from the illumination source until a position very close to the entering surface of the second light guide. Homogeneous light is distributed uniformly from the second light guide at all of the rotating positions of the second light guide when the second light guide rotates around the rotational axis.

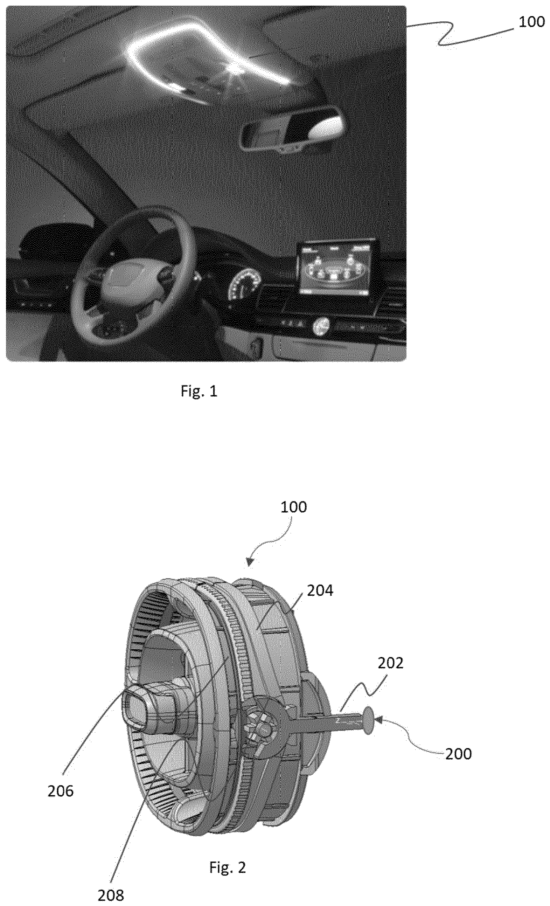

FIG. 1 is a representation of a portion of an interior environment of a vehicle where a system 100 for interior lighting is deployed/implemented. The system 100 is implemented in an interior environment of a vehicle illustrated in FIG. 1 and is used for description purposes with reference to FIGS. 2-5. The system 100 is configured as an in-vehicle device. The system 100 described with reference to FIGS. 2-5 finds application in the illumination of air vents of a vehicle, among others. However, the application of system 100 is not limited to only illumination of air vents of a vehicle. Other exmplary applications of the system 100 could include illumination of control panels and cup holders of a vehicle, rooms of a house and other interior spaces, among others, however only illumination of interior of a vehicle is part of this invention. The system 100 could find application in spaces, which may require uniform distribution of light in desired areas, whereby a stationary part serves as an illumination source and a rotating part is configured to distribute light at each position of rotation in every desired area/corner/direction. In the present invention, the system 100 is preferably positioned or placed in the air vents of the vehicle, as an example.

As shown in FIG. 2, the system 100 includes one or more illumination sources 200. The illumination sources 200 may include one or more light emitting diodes (LEDs) or any other sources of light. The illumination sources 200 may alternatively or additionally include an array on LEDs. The colour of the LEDs may differ based on the application of the system 100. In this example in the present disclosure, the system 100 includes one or more white LEDs as the illumination source 200.

The system 100 may include one or more first light guides 202. In accordance with the present invention, the system 100 includes two identical first light guides 202. The first light guides 202 are stationary or fixed and may be connected to some components or parts (e.g. parts already present in the vehicle) of the vehicle. In the preferred embodiment, the illumination source 200 may be placed away and separate from the first light guide 202 to ensure that not much light escapes the interface between the illumination source 200 and the first light guide 202. Alternatively, the illumination source 200 may be placed in the stationary part i.e. the first light guides 202 of the system 100. The illumination source 200 may be placed in the first light guide 202 as an interior lighting design, which ensures, that not much light escapes the illumination source 200 while entering the first light guides 202. The first light guide 202 may be interchangeably referred to as the stationary part throughout the description.

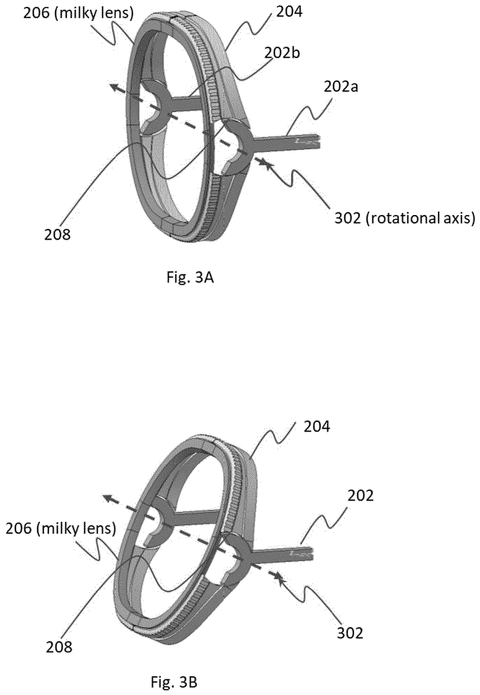

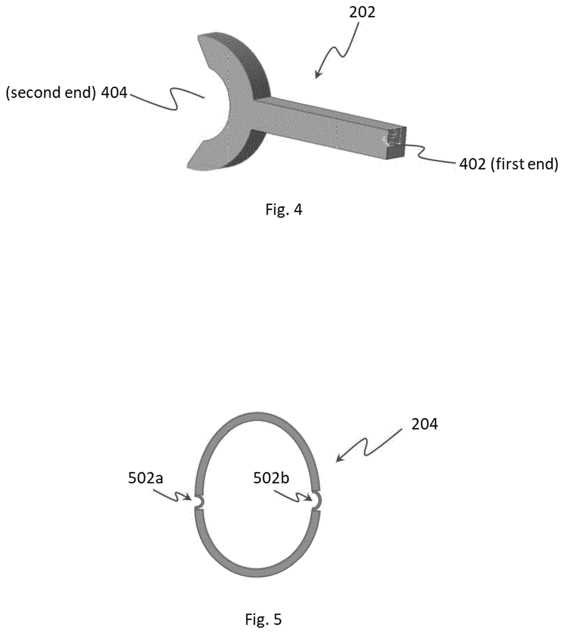

The system 100 further includes a second light guide 204. The second light guide 204 is rotatable around its rotational axis (see 302 in FIG. 3A). The rotational axis 302 passes through the two centers of the two first light guides 202. Light travelling from the illumination source 200 is transmitted to the second light guide 204 from the first light guides 202 at one end (see second end 404 in FIG. 4) of the first light guide 202. An exit surface of the first light guide 202 is present in the second end 404 of the first light guide 202. The exit surface of the first light guides 202 and the entering surface of the second light guide 204 are arranged in a parallel manner such that a gap 208 is maintained between the first light guides 202 and the second light guide 204. The gap 208 is maintained considering the tolerances of the assembly and light guide sizes. The gap 208 may be an air gap or vacuum as an example.

In another embodiment, elements which may be used as light transmitting member coincide the rotational axis 302. In other words, a light transmitting member may be positioned in the position of the rotational axis. The light transmitting member ensures the rotation of the second light guide 204 and also transmission of light from the first light guides 202 to the second light guide 204.

The system 100 may further include an emissive member 206. The emissive member 206 may include, as an example, self-emissive material, clear material with structure such as white lenses or the like such that light is coupled out in a way as it is desired. The emissive member 206 may be an enclosure which houses the second light guide 204 which contributes to the appearance of the system 100. Depending on requirements and applications, the system 100 may include additional components or circuits, which may be already known to a person of ordinary skill in the art.

The first light guides 202 include the light exiting surface at the second end 404 of the first light guides 202. The light exiting surface is configured such that homogeneous light leaves the exiting surface of the first light guides 202 and enters an entering surface of the second light guide 204. Homogeneous light is distributed uniformly from the second light guide 204 at all of the rotating positions of the second light guide 204 when the second light guide 204 rotates around the rotational axis 302.

Referring to FIGs. 3A-3B, an arrangement of two first light guides 202a, 202b and the second light guide 204 are illustrated in two different positions/angles of rotation of the second light guide 204. The second light guide 204 rotates to various rotation positions about the rotational axis 302. As an example, and as shown in the Fig. 3B, the second light guide 204 is operably rotatable to an angle of 25 degrees on either side (± 25°) of the rotational axis 302. Each position/angle of rotation of the rotating part 204 is defined at various angles of rotation of the second light guide 204. Example positions/angles of rotation may include e.g., +5°, +5.5°, +8°, +15°, -2°, -7°, -10° and so on). As the second light guide 204 rotates around the rotational axis 302, at each position/angle of rotation (e.g. +5°, +5.5°, +8°, +15°, -2°, -7°, -10° and so on), the light distribution is uniform and equal in amount. It shall be noted that in this scenario, the amount of rotation is limited by the angle at which the second light guide 204 meets the first light guides 202. The shapes of the light guides could be also adapted to cover a bigger angle for various other applications.

The first light guides 202a and 202b facilitate propagation of homogeneous light from the illumination source 200. For example, the first light guide 202a facilitates propagation of homogeneous light from the illumination source 200 from the first end 402 of the first light guide 202a to the second end 404 of the first light guide 202a. The illumination source 200 may be configured/placed/implemented at the first end 402 of the first light guide 202a. Similarly, the first light guide 202b facilitates propagation of homogeneous light from the illumination source 200 from a first end of the first light guide 202b to a second end of the first light guide 202b. The illumination source 200 may be placed at the first end of the first light guide 202b. The exiting surface of the first light guides 202 and the entering surface of the second light guide 204 are arranged in a parallel manner such that the gap 208 is maintained between the first light guides 202 and the second light guide 204. Light from the first light guides 202a and 202b is coupled to the second light guide 204 axially or laterally via the gap 208. The second end 404 of the first light guide 202a ensures that homogeneous light is received by the second light guide 204 from the second end 404 (FIG. 4). Similarly, the second end of the first light guide 202b ensures that homogeneous light is received by the second light guide 204 from the second end of the first light guide 202b. The second light guide 204 then ensures uniform distribution of the light in desired areas when the second light guide 204 rotates around the rotational axis 302. The rotational axis 302 is positioned orthogonal to a longitudinal axis of the first light guides 202a and 202b as seen in the figures.

In another embodiment, the system 100 includes one or more ribs that facilitate the engagement of first light guides 202 with the second light guide 204 to ensure distribution of the homogeneous light in target areas as the second light guide rotates around its rotational axis. For example, the coupling the first light guide and the second light guide using absorptive ribs may ensure distribution of homogeneous light only in an upper area of the second light guide 204. The ribs may include absorptive ribs as an example.

FIG. 4 represents an exemplary first light guide 202, in accordance with an embodiment of the present invention. The first light guide illustrated in FIG. 4 may be the example first light guide 202a or 202b. For the ease of the description, let's assume the first light guide 202a. The first light guide 202a includes the first end 402 and the second end 404. The second end of the first light guide 202a defines a "C" shaped configuration. The first light guide 202a extends from the first end 402 along a longitudinal axis defining a bar shaped configuration. The bar shaped first light guide 202a defines the "C" shaped configuration at the second end 404 which is the light exiting surface of the first light guide 202a. The first end 402 may house the illumination source 200 of the system 100. A shape defined in the second light guide 204 is engaged with the first light guide 202a by maintaining the gap 208 between the two light guides. The shape or profile of the first light guide 204 is not limited to the example shapes illustrated in FIG. 4. In some embodiments, the shape of the first light guide 204 may be trapezoidal (not shown in FIGs). The first light guide may be composed of one or more of Poly methyl methacrylate (PMMA), Polycarbonate (PC) and flexible silicon, among others. The first light guide 204 may additionally or alternatively be configured with metallized surface or mirrors to achieve better light transmission and to facilitate better light propagation of homogeneous light to the second light guide.

FIG. 5 is an illustration of an exemplary second light guide 204 in accordance with an embodiment of the present invention. The second light guide 204 is configured in a circular configuration. The second light guide 204 defines two or more shapes (502a and 502b) at two or more positions along the circumference of the circular second light guide 204. The shapes 502a and 502b are configured/defined such that they complement the C-shaped configuration of the first light guides 204. In this example, because of the shapes of the first light guides 202 and the second light guide 204 the exiting surface of the first light guides 202 and the entering surface of the second light guide 204 are arranged in a concentric fashion such that the gap 208 is maintained between the first light guides 202 and the second light guide 204. When light is coupled from the first light guides 202 to the second light guide 204, light is distributed uniformly in all desired areas of a space at all positions of rotation of the second light guide 204. The second light guide is composed of one or more of Poly methyl methacrylate (PMMA), Polycarbonate (PC) and flexible silicon, among others.

The embodiments disclosed herein provide numerous advantages. The system disclosed herein enables the system for interior lighting by implementing a stationary unit and a rotational unit to distribute light uniformly around the interior of a vehicle. Lighting of air vents and control panels of a vehicle is of critical importance from the perspective of Automated-Driver-Assistance-Systems (ADAS), which helps to avoid accidents by ensuring lighting systems mitigates driver distraction and ensure safe driving.

The foregoing descriptions of specific embodiments of the present invention have been presented for purposes of illustration and description. They are not intended to be exhaustive or to limit the present invention to the precise forms disclosed, and obviously many modifications and variations are possible in light of the above teaching. The embodiments were chosen and described in order to best explain the principles of the present invention and its practical application, to thereby enable others skilled in the art to best utilize the present invention and various embodiments with various modifications as are suited to the particular use contemplated. It is understood that various omissions and substitutions of equivalents are contemplated as circumstance may suggest or render expedient, but such are intended to cover the application \or implementation without departing from the scope of the claims.

## Claims

1. A rotating illumination system for interior of a vehicle, the rotating illumination system comprising:
one or more first light guides (202) for propagating light, the light being received from one or more illumination sources by a first end (402) of each of the one or more first light guides (202), wherein the light exits from a second end (404) of each of the one or more first light guides (202); and
a second light guide (204) configured to receive the light from one or more first light guides (202) homogeneously, the second light guide (204) movable around its rotational axis (302) to facilitate distribution of the homogeneous light at each position of rotation of the second light guide (204),
wherein the second light guide (204) is circular, and
wherein the second end (404) of each first light guide (202) is C-shaped, and the second light guide (204) receives the light homogeneously from each C-shaped end of each first light guide (202) in each rotation position of the second light guide (204) about the rotational axis (302),
**characterized in that**
the system includes two first light guides (202a, 202b), wherein each of the two first light guides (202a, 202b) extends from the first end (402) along a longitudinal axis defining a bar shaped configuration, and the rotational axis (302) passes through the two centers of the C-shaped ends of the two first light guides (202a, 202b), wherein the second light guide (204) defines two shapes (502a, 502b) at two positions along the circumference of the circular second light guide (204) which are configured such that they complement the C-shaped configuration of the first light guides (204),
wherein each of the shapes (502a, 502b) is parallel and concentric to one of the C-shaped configurations of the two first light guides (202a, 202b).

2. The rotating illumination system of claim 1, wherein the two first light guides (202a, 202b) are stationary.

3. The rotating illumination system of claim 1, wherein each of the first light guides (202) and the second light guide (204) are arranged parallel to one another maintaining a gap (208) between the first light guide and the second light guide.

4. The rotating illumination system as claimed in claim 1, wherein the second light guide is operably rotatable to a specific degree of rotation around its rotational axis (302) and/or the first light guides are configured with metallized surface.

5. The rotating illumination system of claim 1, wherein the first light guides (202) and the second light guide (204) are composed of one or more of Poly methyl methacrylate (PMMA), Polycarbonate (PC) or flexible silicon.

6. The rotating illumination system of claim 1, further comprising one or more ribs for coupling each of the first light guides (202) and the second light guide (204) and/or further comprising an emissive member (206) housing the second light guide (204) to distribute homogeneous light in desired target areas.

## Patentansprüche

1. Drehendes Ausleuchtungssystem für den Innenraum eines Fahrzeugs, wobei das drehende Ausleuchtungssystem umfasst:
einen oder mehrere erste Lichtleitstäbe (202) zum Weiterleiten von Licht, wobei das Licht von einer oder mehreren Ausleuchtungsquellen durch ein erstes Ende (402) jedes von dem einen oder mehreren Lichtleitstäben (202) empfangen wird, wobei das Licht von einem zweiten Ende (404) jedes von dem einen oder mehreren ersten Lichtleitstäben (202) austritt; und
einen zweiten Lichtleitstab (204), dazu ausgelegt, das Licht von einem oder mehreren ersten Lichtleitstäben (202) homogen zu empfangen, wobei der zweite Lichtleitstab (204) um seine Drehachse (302) bewegbar ist, um die Verteilung des homogenen Lichts in jeder Drehposition des zweiten Lichtleitstabs (204) zu erleichtern,
wobei der zweite Lichtleitstab (204) rund ist, und
wobei das zweite Ende (404) jedes ersten Lichtleitstabs (202) C-förmig ist und der zweite Lichtleitstab (204) das Licht von jedem C-förmigen Ende jedes ersten Lichtleitstabs (202) in jeder Drehposition des zweiten Lichtleitstabs (204) um die Drehachse (302) homogen empfängt,
**dadurch gekennzeichnet, dass**
das System zwei erste Lichtleitstäbe (202a, 202b) umfasst, wobei sich jeder von den zwei ersten Lichtleitstäben (202a, 202b) von dem ersten Ende (402) entlang einer Längsachse, eine stabförmige Konfiguration definierend, erstreckt, und die Drehachse (302) durch die zwei Mitten der C-förmigen Enden der zwei ersten Lichtleitstäbe (202a, 202b) verläuft, wobei der zweite Lichtleitstab (204) zwei Formen (502a, 502b) an zwei Positionen entlang des Umfangs des ringförmigen zweiten Lichtleitstabs (204) definiert, die so ausgestaltet sind, dass sie die C-förmige Konfiguration der ersten Lichtleitstäbe (204) ergänzen,
wobei jede von den Formen (502a, 502b) parallel und konzentrisch zu einer von den C-förmigen Konfigurationen der zwei ersten Lichtleitstäbe (202a, 202b) ist.

2. Drehendes Ausleuchtungssystem nach Anspruch 1, wobei die zwei ersten Lichtleitstäbe (202a, 202b) stationär sind.

3. Drehendes Ausleuchtungssystem nach Anspruch 1, wobei jeder von den ersten Lichtleitstäben (202) und der zweite Lichtleitstab (204) parallel zueinander angeordnet sind, einen Spalt (208) zwischen dem ersten Lichtleitstab und dem zweiten Lichtleitstab aufrechterhaltend.

4. Drehendes Ausleuchtungssystem nach Anspruch 1, wobei der zweite Lichtleitstab bis zu einem bestimmten Drehwinkel um seine Drehachse (302) betriebsbereit drehbar ist und/oder die ersten Lichtleitstäbe mit metallisierter Oberfläche ausgestaltet sind.

5. Drehendes Ausleuchtungssystem nach Anspruch 1, wobei die ersten Lichtleitstäbe (202) und der zweite Lichtleitstab (204) aus einem oder mehreren von Polymethylmethacrylat **(PMMA),** Polycarbonat **(PC)** oder flexiblem Silicium bestehen.

6. Drehendes Ausleuchtungssystem nach Anspruch 1, ferner umfassend eine oder mehrere Rippen zum Koppeln jedes von dem ersten Lichtleitstäben (202) und dem zweiten Lichtleitstab (204) und/oder ferner umfassend ein ausstrahlendes Element (206), in dem der zweite Lichtleitstab (204) untergebracht ist, um homogenes Licht in gewünschten Zielbereichen zu verteilen.

## Revendications

1. Un système d'éclairage rotatif pour l'intérieur d'un véhicule, le système d'éclairage rotatif comprenant :
un ou plusieurs premiers guides de lumière (202) pour propager la lumière, la lumière étant reçue d'une ou plusieurs sources d'éclairage par une première extrémité (402) de chacun des premiers guides de lumière (202), la lumière sortant par une deuxième extrémité (404) de chacun des premiers guides de lumière (202) ; et
un deuxième guide de lumière (204) configuré pour recevoir la lumière d'un ou plusieurs premiers guides de lumière (202) de manière homogène, le deuxième guide de lumière (204) étant mobile autour de son axe de rotation (302) pour faciliter la distribution de la lumière homogène à chaque position de rotation du deuxième guide de lumière (204),
sachant que le second guide de lumière (204) est circulaire, et
sachant que la deuxième extrémité (404) de chaque premier guide de lumière (202) est en forme de C et que le deuxième guide de lumière (204) reçoit la lumière de manière homogène à partir de chaque extrémité en forme de C de chaque premier guide de lumière (202) dans chaque position de rotation du deuxième guide de lumière (204) autour de l'axe de rotation (302),
**caractérisée en ce que**
le système comprend deux premiers guides de lumière (202a, 202b), chacun des deux premiers guides de lumière (202a, 202b) s'étendant à partir de la première extrémité (402) le long d'un axe longitudinal définissant une configuration en forme de barre et l'axe de rotation (302) passant par les deux centres des extrémités en forme de C des deux premiers guides de lumière (202a, 202b), le second guide de lumière (204) définissant deux formes (502a, 502b) en deux positions le long de la circonférence du second guide de lumière circulaire (204) qui sont configurées de manière à compléter la configuration en forme de C des premiers guides de lumière (204),
sachant que chacune des formes (502a, 502b) est parallèle et concentrique à l'une des configurations en forme de C des deux premiers guides de lumière (202a, 202b).

2. Le système d'éclairage rotatif de la revendication 1, dans lequel les deux premiers guides de lumière (202a, 202b) sont stationnaires.

3. Le système d'éclairage rotatif de la revendication 1, dans lequel chacun des premiers guides de lumière (202) et le second guide de lumière (204) sont disposés parallèlement l'un à l'autre en maintenant un espace (208) entre le premier guide de lumière et le second guide de lumière.

4. Le système d'éclairage rotatif selon la revendication 1, dans lequel le second guide de lumière peut tourner à un degré spécifique autour de son axe de rotation (302) et/ou les premiers guides de lumière sont configurés avec une surface métallisée.

5. Le système d'éclairage rotatif de la revendication 1, dans lequel les premiers guides de lumière (202) et le second guide de lumière (204) sont constitués d'un ou plusieurs éléments en polyméthacrylate de méthyle **(PMMA),** polycarbonate **(PC)** ou silicone souple.

6. Le système d'éclairage rotatif de la revendication 1 comprend en outre une ou plusieurs nervures pour coupler chacun des premiers guides de lumière (202) et le second guide de lumière (204) et/ou comprend en outre un élément émetteur (206) abritant le second guide de lumière (204) pour distribuer une lumière homogène dans les zones cibles souhaitées.
